# EUROPÄISCHE PATENTSCHRIFT

(11) **EP 2 838 704 B1**
(45) Veröffentlichungstag und Bekanntmachung des Hinweises auf die Patenterteilung: **17.02.2016**
(21) Anmeldenummer: 13722692.4
(22) Anmeldetag: 18.04.2013
(51) Int. Cl.: B29C 47/60, B29C 47/66, B29C 47/08, B29C 47/62

(54) **EINSCHNECKENEXTRUDER MIT EINEM GENUTETEN EINZUGSSYSTEM**
SINGLE-SCREW EXTRUDER HAVING A GROOVED INFEED SYSTEM
EXTRUDEUSE MONOVIS POURVUE D'UN SYSTÈME D'ALIMENTATION RAINURÉ

(30) Priorität: 21.04.2012 DE 102012008023
(43) Veröffentlichungstag der Anmeldung: 25.02.2015
(73) Patentinhaber: KraussMaffei Technologies GmbH, 80997 München (DE)
(72) Erfinder: SCHNEIDER, Florian Johannes, 83346 Bergen (DE); PAPE, Jens, 32457 Porta Westfalica (DE)
(74) Vertreter: Roider, Stephan
(86) Internationale Anmeldenummer: PCT/EP2013/058059
(87) Internationale Veröffentlichungsnummer: WO 2013/156555

(56) Entgegenhaltungen:
- DD-A1- 134 616
- DE-A1- 2 936 592
- DE-B3-102008 046 633
- DE-C2- 2 943 230
- JP-A- S 548 662
- JP-Y1- S5 227 900
- US-A1- 2004 141 406

## Beschreibung

Die vorliegende Erfindung betrifft einen Einschneckenextruder mit einem genuteten Einzugssystem, einem Zylinder und einer in dem Zylinder drehbar gelagerten Extruderschnecke, die eine Erweichungszone, eine Hauptplastifizierzone bzw. Hauptaufschmelzzone sowie eine Nachplastifizierzone bzw. Homogenisier- oder Restaufschmelzzone aufweist und im Bereich der Hauptplastifizierzone wenigstens zweigängig ausgestaltet ist.

Eine immerwährende Anforderung an Einschneckenextruder ist die Erhöhung ihrer Produktivität. Hohe Durchsätze bei niedrigen Austragstemperaturen und hoher Schmelzequalität sollen erreicht werden. Zur Erhöhung des Durchsatzes gibt es zwei Möglichkeiten: Erhöhung des spezifischen Durchsatzes, z.B. durch die Verwendung genuteter Einzugssysteme, und/oder Erhöhung der Drehzahl. Beide Maßnahmen gehen einher mit einer Verkürzung der Verweilzeit der Schmelze im Extruder. Um diese geringeren Verweilzeiten zu kompensieren und die Aufschmelzleistung beizubehalten, wurden die partiellen Widerstände erhöht, indem die Überströmspalte verengt wurden. Diese Maßnahme hat jedoch neben dem erhöhten Druckverlust den Nachteil eines erhöhten Verschleißes und einer verminderten energetischen Effizienz.

Benachbarter Stand der Technik ist beispielsweise aus den Druckschriften DE 29 36 592 A1, DD 134 01 A1, DE 29 43 230 C2, JP S54 8662 A, JP S52 27900 A, DE 10 2008 046 633 B3 und US 2004/0141406 A1 bekannt.

Der vorliegenden Erfindung liegt nun die Aufgabe zugrunde, einen Einschneckenextruder bereitzustellen, der eine verbesserte Aufschmelzwirkung bei gleichzeitig erhöhtem Durchsatz, verringerter Schmelzetemperatur und verbessertem Druckaufbauvermögen ermöglicht.

Diese Aufgabe wird durch einen Einschneckenextruder mit den Merkmalen des Anspruchs 1 gelöst, wobei wenigstens ein Schneckensteg vor jedem Wellenberg zu einem Spalt abgesetzt, also tiefer geschnitten als der übrige Außendurchmesser der Schnecke, ist und die sich ergebende Spalthöhe der Gangtiefe des jeweils nachfolgenden Wellenberges entspricht. Bei einer ET-Schnecke heißt das, dass jeder Schneckensteg auf der aktiven Gangseite vor jedem Wellenberg zu einem Spalt abgesetzt ist, wobei die Spalthöhe jeweils der Gangtiefe des nachfolgenden Wellenberges entspricht. Die aktive Gangseite ist die Gangseite, aus der die Schmelze über den abgesetzten Steg auf die passive Gangseite strömt.. Vorteilhafte Weiterbildungen sind in den Unteransprüchen beschrieben.

Der Erfindung liegt der Gedanke zugrunde, eine Polygonschnecke mit einem genuteten Einzugssystem sowie in einem wenigstens teilweise genuteten Zylinder zu betreiben. Polygonschnecken sind beispielsweise Energy-Transfer-Schnecken (ET-Schnecken) und Wave-Schnecken. Diese weisen einen wellenförmigen Gangtiefenverlauf und abgesetzte Stegbereiche auf, über welche die Schmelze vor einem Wellenberg, d.h. Gangtiefenminimum, übertritt. Während bei Wave-Schnecken immer der gleiche Steg abgesetzt ist, so dass die Schmelze in unterschiedlichen Richtungen überströmt, sind bei ET-Schnecken die Stege abwechselnd vor jedem Wellenberg abgesetzt, so dass die Schmelze immer in der gleichen Richtung überströmt. Die Polygonschnecke weist im Bereich der Hauptplastifizierzone wenigstens zwei Gänge bzw. Kanäle mit in jedem Gang wellenförmig variierender Gangtiefe und von Gang zu Gang versetzten Wellenbergen auf. Im Bereich der Hauptplastifizierzone weist der Zylinder erfindungsgemäß wenigstens teilweise mindestens eine Nut auf, die im Wesentlichen in Längsrichtung, also axial oder spiralförmig, nicht jedoch ausschließlich radial, verläuft.

In einer vorteilhaften Ausgestaltung verringert sich im Bereich der Hauptplastifizierzone die minimale Gangtiefe bzw. Kanalhöhe in Verfahrensrichtung von Wellenberg des einen Ganges zu Wellenberg des anderen Ganges so, dass die relative Kompression, also das Verhältnis der Gangtiefen zweier aufeinanderfolgender Wellenberge, in etwa konstant bleibt. Aufeinanderfolgende Wellenberge sind der Wellenberg eines Ganges und der darauffolgende Wellenberg des benachbarten Ganges. Demgegenüber vergrößert sich die Gangtiefe in den Talbereichen, d.h. Gangtiefenmaxima, entlang der Schnecke von Tal zu Tal, um die Verweilzeit des Kunststoffes zu erhöhen. Längere Verweilzeiten begünstigen Temperaturausgleichsvorgänge in der Rohschmelze zwischen kalten und warmen Materialanteilen.

Bei einer Wave-Schnecke kann der abgesetzte Steg stufenförmig oder kontinuierlich abgesetzt sein. Dabei entspricht bei einem stufenförmig abgesetzten Steg die Spalthöhe jeweils der Gangtiefe des nachfolgenden Wellenberges, während bei einem kontinuierlich abgesetzten Steg die Spalthöhe an dem nachfolgenden Wellenberg jeweils der Gangtiefe dieses nachfolgenden Wellenberges entspricht.

Dabei ist es besonders bevorzugt, dass sich die Länge des jeweils abgesetzten Stegbereichs entlang der Schnecke in Verfahrensrichtung von Wellenberg zu Wellenberg vergrößert, so dass die Fläche aus Spalthöhe und Spaltlänge in Verfahrensrichtung ca. 1 bis 5 %, insbesondere jedoch ca. 1 bis 2 %, zunimmt. Auf diese Weise wird die abnehmende Gangtiefe im Bereich der Wellenberge kompensiert und die Zunahme der Fläche aus Spalthöhe und Spaltlänge wird der Zunahme des Schmelzeflusses über den Steg gerecht.

Vorteilhaft ist weiterhin eine Gangsteigung der Hauptplastifizierzone von 1,3 D (dimensionslose Steigung), da diese fördertechnisch den höchsten Wirkungsgrad erreicht. Die abgesetzten Stegbereiche sind vorteilhafterweise auf der aktiven Flanke mit einer 45°-Fase über etwa 30 bis 70 Prozent, bevorzugt ca. 50 Prozent, der Stegbreite, versehen. Durch diese Fase wird das Material beschleunigt und der energetisch effektivere Dehnströmungsanteil erhöht.

Die Abschnitte zunehmender Gangtiefe hinter den Wellenbergen sind vorteilhafterweise hinterschnitten, d. h. die Gangtiefe hinter dem Bergkamm nimmt schnell wieder zu, während die Gangtiefe vor dem Bergkamm nur langsam abnimmt. Mit anderen Worten, die Abschnitte zunehmender Gangtiefe hinter einem Wellenberg weisen eine steilere Flanke auf als die Abschnitte abnehmender Gangtiefe vor einem Wellenberg. Auf diese Weise werden unnötige Scherungen vermieden und wird das Material besser gefördert.

Gemäß einer bevorzugten Weiterbildung ist die Schnecke in Abschnitten abnehmender Gangtiefe vor einem Wellenberg vorteilhafterweise mit zusätzlichen nutförmigen Ausnehmungen, sogenannten Mischtaschen, versehen. Die Mischtaschen verlaufen parallel zu den Schneckenstegen am Schneckengrund. Die Mischtaschen fördern die Durchmischung von Feststoff und Schmelze. Eine mehrreihige Anordnung der Mischtaschen verstärkt diesen positiven Effekt.

Es ist ferner von Vorteil, dass der Tiefenverlauf und/oder die Breite und/oder der Querschnitt der Nut auf das Schneckenprofil abgestimmt sind. In einer bevorzugten Ausgestaltung weist die Nuttiefe im Bereich eines Wellenberges ein lokales Minimum auf. Auf diese Weise kann der Energieumsatz bzw. das Aufschmelzvermögen im Bereich der Wellenberge gesteuert werden und eine Art Drainageeffekt für die Restfeststoffanteile erzeugt werden.

Der erfindungsgemäße Einschneckenextruder weist eine deutlich höhere Aufschmelzleistung als bekannte Systeme auf, wobei die Tendenz zur Materialüberhitzung stark reduziert ist. Außerdem ist der vergleichsweise geringe Platzbedarf des erfindungsgemäßen Einschneckenextruders wirtschaftlich vorteilhaft. Darüber hinaus kann durch die erfindungsgemäße Ausgestaltung das Druckniveau im Zylinder signifikant abgesenkt werden, wodurch der energetische Wirkungsgrad entscheidend verbessert wird und mit einer höheren Lebensdauer des Extruders zu rechnen ist.

Die Erfindung wird nachfolgend anhand von Ausführungsbeispielen und unter Bezugnahme auf die Zeichnungen näher erläutert. Es zeigen:
- Fig. 1: eine Abwicklung mit Gangtiefenverlauf einer Extruderschnecke gemäß einem ersten Ausführungsbeispiel der Erfindung;
- Fig. 2: eine Abwicklung mit Gangtiefenverlauf einer Extruderschnecke mit Mischtaschen gemäß einem zweiten Ausführungsbeispiel der Erfindung;
- Fig. 3: einen vergrößerten Ausschnitt der Mischtaschen aus Fig. 2 gemäß dem zweiten Ausführungsbeispiel der Erfindung.

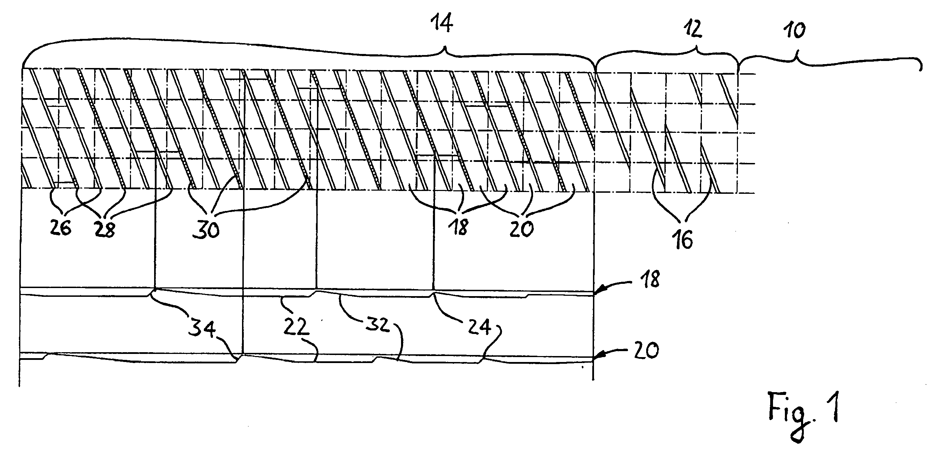

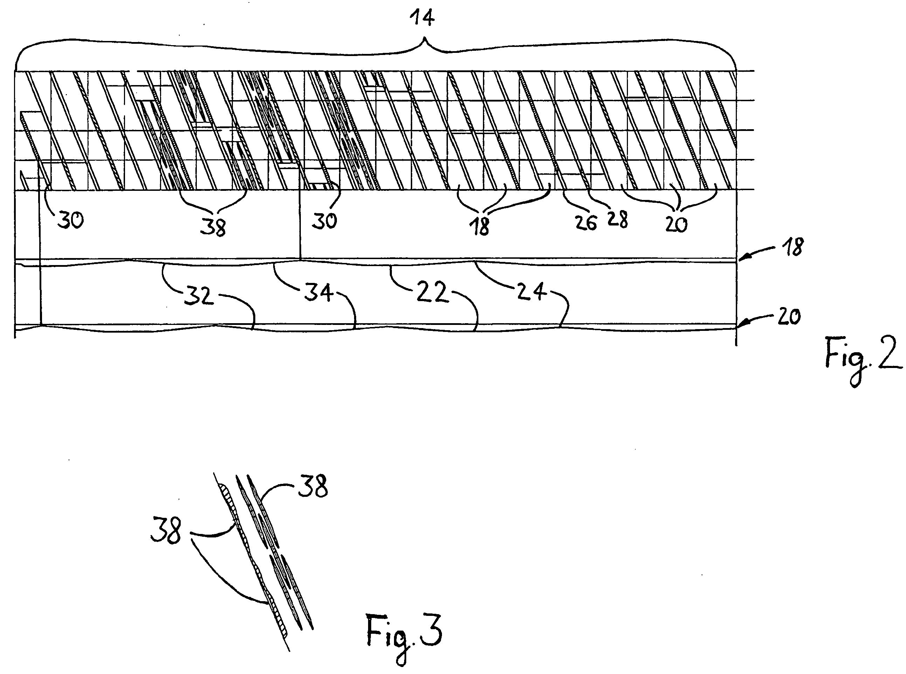

Der erfindungsgemäße Einschneckenextruder umfasst einen in den Figuren nicht dargestellten Zylinder und eine in dem Zylinder drehbar gelagerte Polygonschnecke. In den hier beschriebenen Ausführungsbeispielen ist die Polygonschnecke als Energy-Transfer-Schnecke ausgestaltet, wie auch in den Fig. 1 und 2 dargestellt. In alternativen Ausführungen kann die Polygonschnecke natürlich auch als Wave-Schnecke ausgestaltet sein.

Fig. 1 zeigt eine Abwicklung mit Gangtiefenverlauf einer Extruderschnecke gemäß einem ersten Ausführungsbeispiel der Erfindung. Die Extruderschnecke umfasst in Verfahrensrichtung eine Einzugszone 10, eine Erweichungszone 12, eine Hauptplastifizierzone 14 sowie eine nicht dargestellte Nachplastifizierzone. Wie in Fig. 1 ersichtlich, umfasst die Erweichungszone 12 versetzt angeordnete, kurze Stegabschnitte 16, die das noch kalte, harte Feststoffbett mehrfach unterteilen. Daraus resultiert eine Temperaturerhöhung im Feststoff. Er wird dadurch plastisch verformbarer.

Wie in Fig. 1 dargestellt, weist die Hauptplastifizierzone 14 zwei Gänge bzw. Kanäle 18, 20 auf. Die Gangtiefe der beiden Gänge 18, 20 ändert sich unabhängig voneinander mehrfach wellenförmig entlang der Schnecke. Auf diese Weise ergeben sich tiefe Gangabschnitte - Wellentäler 22, flache Gangabschnitte - Wellenberge 24 sowie Abschnitte mit abnehmender Gangtiefe 32 und Abschnitte mit zunehmender Gangtiefe 34. Während Wellentäler 22 sowie Abschnitte abnehmender 32 und zunehmender Gangtiefe 34 eine bestimmte Länge aufweisen, weisen die Wellenberge 24 idealerweise, wie auch in Fig. 1 erkennbar, ein punktförmiges Gangtiefenminimum auf und erstrecken sich nicht über einen längeren Bereich. Zwischen den Gängen 18, 20 weist die Schnecke Stege 26, 28 auf, die die gleiche, konstante Steigung aufweisen.

Wie in Fig. 1 dargestellt, verringert sich im Bereich der Hauptplastifizierzone 14 die minimale Gangtiefe an den Wellenbergen 24 von Wellenberg zu Wellenberg so, dass die relative Kompression, also das Verhältnis der Gangtiefen zweier aufeinanderfolgender Wellenberge 24, in etwa konstant bleibt. Die maximale Gangtiefe in den Wellentälern 22 nimmt hingegen von Tal zu Tal zu. Dabei sind Gangtiefe und Gangbreite von der für den gewünschten Durchsatz notwendigen Förderleistung abhängig.

Die Schneckenstege 26, 28 weisen auf ihrer aktiven Flanke vor den Wellenbergen jeweils abgesetzte Bereiche - Spalte 30 - auf. Die Spalthöhe entspricht dabei der Gangtiefe des nachfolgenden Wellenberges 24. Wie in Fig. 1 ersichtlich, vergrößert sich die Länge der Spalte 30 von Spalt zu Spalt. Die Fläche aus Spalthöhe und Spaltlänge nimmt in Verfahrensrichtung von Spalt zu Spalt 1 bis 2 Prozent zu. Die Spalte sind auf ihrer aktiven Flanke mit einer 45°-Fase über 50 Prozent der Stegbreite versehen. Die Fasenbreite entspricht der halben Stegbreite.

Gemäß dem ersten Ausführungsbeispiel weist die Hauptplastifizierzone eine Gangsteigung von 1,3 D (dimensionslose Steigung) auf.

Wie in Fig. 1 im Gangtiefenverlauf ersichtlich, sind die Abschnitte zunehmender Gangtiefe 34 hinter den Wellenbergen 24 hinterschnitten, d.h. sie weisen eine steilere Flanke auf, als die Abschnitte abnehmender Gangtiefe 32 vor den Wellenbergen 24.

Gemäß einem zweiten Ausführungsbeispiel der Erfindung, dargestellt in Fig. 2, weist die Schnecke in Abschnitten abnehmender Gangtiefe 34 nutförmige Ausnehmungen - Mischtaschen 38 - auf. In dem Ausführungsbeispiel verlaufen jeweils mehrere Mischtaschen 38 parallel nebeneinander und parallel zu den Schneckenstegen 26, 28 am Schneckengrund. Wie in Fig. 3 ersichtlich, sind in diesem Ausführungsbeispiel die Mischtaschen zueinander versetzt angeordnet und weisen jeweils eine variierende Breite und Tiefe auf. So weisen die Mischtaschen in einem mittleren Bereich eine größere Tiefe und Breite auf und verjüngen sich zu ihren Enden sowohl hinsichtlich Tiefe als auch Breite, so dass sie einen fließenden Übergang zur Zylinderinnenwand bilden und Totzonen vermieden werden. Im Übrigen entspricht die Ausgestaltung der erfindungsgemäßen Extruderschnecke des zweiten Ausführungsbeispiels im Wesentlichen derer des ersten Ausführungsbeispiels; gleiche Elemente sind daher mit den selben Bezugszeichen versehen.

In dem in den Figuren nicht dargestellten Zylinder ist im Bereich der Hauptplastifizierzone in der Zylinderinnenwand eine Nut angeordnet. Dabei ist der Tiefenverlauf der Nut auf das Profil der Polygonschnecke abgestimmt. Gemäß den Ausführungsbeispielen weist die Nuttiefe im Bereich eines Wellenberges der Polygonschnecke ein lokales Minimum auf. In den vorliegenden Ausführungsbeispielen erstreckt sich die Nut in der Zylinderinnenwand über die gesamte Länge der Hauptplastifizierzone spiralförmig und weist einen rechteckigen Querschnitt auf. Die Nut kann jedoch verschiedene Querschnitte aufweisen, bspw. halbkreisförmig, rechteckig, dreieckig, insbesondere sägezahnförmig, etc., und kann sich vollständig oder nur teilweise axial oder spiralförmig entlang der Zylinderinnenwand erstrecken. Eine Kombination aus mehreren Ausgestaltungen ist ebenfalls möglich.

Mit einem Einschneckenextruder gemäß der vorliegenden Erfindung lässt sich also ein höherer Durchsatz bei verbesserter Schmelzequalität realisieren.

### Bezugszeichenliste

- 10: Einzugszone
- 12: Erweichungszone
- 14: Hauptplastifizierzone
- 16: Stegabschnitt der Erweichungszone
- 18: Gang 1/ Kanal 1
- 20: Gang 2/ Kanal 2
- 22: Wellental
- 24: Wellenberg
- 26: Schneckensteg 1
- 28: Schneckensteg 2
- 30: Spalt
- 32: Abschnitt abnehmender Gangtiefe
- 34: Abschnitt zunehmender Gangtiefe
- 38: Mischtasche

## Patentansprüche

1. Einschneckenextruder mit einem genuteten Einzugssystem, einem Zylinder und einer in dem Zylinder drehbar gelagerten Polygonschnecke, die eine Erweichungszone (12), eine Hauptplastifizierzone (14) sowie eine Nachplastifizierzone und im Bereich der Hauptplastifizierzone (14) wenigstens zwei Gänge (18, 20) mit jeweils wellenförmig variierender Gangtiefe und zueinander versetzten Wellenbergen (24) aufweist,
wobei in der Zylinderinnenwand im Bereich der Hauptplastifizierzone (14) wenigstens partiell mindestens eine im Wesentlichen in Längsrichtung verlaufende Nut vorgesehen ist, **dadurch gekennzeichnet, dass** im Bereich der Hauptplastifizierzone (14) wenigstens ein Schneckensteg (26, 28) vor jedem Wellenberg (24) zu einem Spalt (30) abgesetzt ist und die sich ergebende Spalthöhe der Gangtiefe des jeweils nachfolgenden Wellenberges (24) entspricht.

2. Einschneckenextruder nach Anspruch 1, wobei die Polygonschnecke als Energy-Transfer-Schnecke ausgestaltet ist und im Bereich der Hauptplastifizierzone (14) jeder Schneckensteg auf der aktiven Gangseite vor jedem Wellenberg (24) zu einem Spalt (30) abgesetzt ist und die sich ergebende Spalthöhe der Gangtiefe des jeweils nachfolgenden Wellenberges (24) entspricht.

3. Einschneckenextruder nach Anspruch 1 oder 2, wobei sich die Spaltlänge in Verfahrensrichtung jeweils so vergrößert, dass die Fläche aus Spalthöhe und Spaltlänge jeweils zweier aufeinanderfolgender Spalte (30) um 1 bis 5 Prozent, insbesondere um 1 bis 2 Prozent, zunimmt.

4. Einschneckenextruder nach einem der vorhergehenden Ansprüche, wobei die Abschnitte zunehmender Gangtiefe (34) hinter einem Wellenberg (24) eine steilere Flanke aufweisen als die Abschnitte abnehmender Gangtiefe (32) vor einem Wellenberg (24).

5. Einschneckenextruder nach einem der vorhergehenden Ansprüche, wobei die Polygonschnecke in Abschnitten abnehmender Gangtiefe (32) vor einem Wellenberg (24) parallel zum Schneckensteg verlaufende nutförmige Ausnehmungen (38) aufweist.

6. Einschneckenextruder nach einem der vorhergehenden Ansprüche, wobei die Tiefe der Nut in der Zylinderinnenwand im Bereich eines Wellenberges (24) der Polygonschnecke ein lokales Minimum aufweist.

## Claims

1. A single screw extruder with a grooved infeed system, a cylinder and a polygonal screw rotatably mounted in the cylinder, which has a softening zone (12), a main plasticizing zone (14) and a post-plastcizing zone and in the region of the main plasticizing zone (14) at least two channels (18, 20) with a channel depth respectively varying in an undulating manner and crests (24) offset to one another,
wherein in the cylinder inner wall in the region of the main plasticizing zone (14) at least partially at least one groove is provided, running substantially in longitudinal direction, **characterized in that** in the region of the main plasticizing zone (14) at least one screw thread (26, 28) is offset to form a gap (30) in front of each crest (24) and the resulting gap height corresponds to the channel depth of the respectively following crest (24).

2. The single-screw extruder according to Claim 1, wherein the polygonal screw is configured as an energy transfer screw and in the region of the main plasticizing zone (14) each screw thread on the active channel side is offset to form a gap (30) in front of each crest (24) and the resulting gap height corresponds to the channel depth of the respectively following crest (24).

3. The single-screw extruder according to Claim 1 or 2, wherein the gap length in the processing direction increases respectively so that the surface area of gap height and gap length respectively of two successive gaps (30) increases by 1 to 5 percent, in particular by 1 to 2 percent.

4. The single-screw extruder according to one of the preceding claims, wherein the sections of increasing channel depth (34) behind a crest (24) have a steeper flank than the sections of decreasing channel depth (32) in front of a crest (24).

5. The single-screw extruder according to one of the preceding claims, wherein the polygonal screw in sections of decreasing channel depth (32) in front of a crest (24) has groove-shaped recesses (38) running parallel to the screw thread.

6. The single-screw extruder according to one of the preceding claims, wherein the depth of the groove in the cylinder inner wall has a local minimum in the region of a crest (24) of the polygonal screw.

## Revendications

1. Extrudeuse mono-vis comprenant un système d'alimentation rainuré, un cylindre et une vis polygonale positionnée rotative dans le cylindre, qui présente une zone de ramollissement (12), une zone de plastification principale (14) ainsi qu'une zone de plastification en aval et au niveau de la zone de plastification principale (14), au moins deux filets (18, 20) avec chacun une profondeur de filet variable hélicoïdale et des crêtes d'hélice (24) décalées l'une par rapport à l'autre,
sachant qu'au moins une rainure passant essentiellement dans le sens longitudinal est prévue dans la paroi intérieure du cylindre au niveau de la zone de plastification principale (14), au moins partiellement, **caractérisé en ce qu'**au niveau de la zone de plastification principale (14), au moins une crête de la vis (26, 28) est abaissée jusqu'à une fente (30) devant chaque crête d'hélice (24) et la hauteur de fente qui en résulte correspond à la profondeur de filet de la crête d'hélice (24) suivante correspondante.

2. Extrudeuse mono-vis selon la revendication 1, dans lequel la vis polygonale est formée en tant que vis à transfert d'énergie, et au niveau de la zone de plastification principale (14), chaque crête de la vis sur le côté de filet actif est abaissée jusqu'à une fente (30) devant chaque crête d'hélice (24) et la hauteur de fente qui en résulte correspond à la profondeur de filet de la crête d'hélice (24) suivante correspondante.

3. Extrudeuse mono-vis selon la revendication 1 ou 2, dans lequel la longueur de fente est ainsi respectivement agrandie dans le sens du procédé que la surface issue de la hauteur de fente et de la longueur de fente de deux fentes (30) successives augmente de 1 à 5 pourcents, en particulier de 1 à 2 pourcents.

4. Extrudeuse mono-vis selon l'une des revendications précédentes, dans lequel les tronçons de profondeur de filet croissante (34) présentent un flanc plus raide derrière une crête d'hélice (24) que les tronçons de profondeur de filet décroissante (32) devant une crête d'hélice (24).

5. Extrudeuse mono-vis selon l'une des revendications précédentes, dans lequel la vis polygonale dans des tronçons de profondeur de filet décroissante (32) devant une crête d'hélice (24) présente des évidements (38) en forme de rainure parallèles à la crête de la vis.

6. Extrudeuse mono-vis selon l'une des revendications précédentes, dans lequel la profondeur de la rainure dans la paroi intérieure du cylindre présente un minimum local au niveau de la crête d'hélice (24) de la vis polygonale.
